Europäisches Patentamt

European Patent Office

Office européen des brevets

(11) Veröffentlichungsnummer: **0 224 466**
**A2**

## (12) EUROPÄISCHE PATENTANMELDUNG

(21) Anmeldenummer: 86890221.4

(22) Anmeldetag: 30.07.86

(51) Int. Cl.⁴: **F 23 B 1/36**
F 23 B 1/14, F 23 L 15/04

(30) Priorität: 27.11.85 AT 3456/85

(43) Veröffentlichungstag der Anmeldung:
03.06.87 Patentblatt 87/23

(84) Benannte Vertragsstaaten:
AT BE CH DE FR GB IT LI LU NL SE

(71) Anmelder: **Prossegger, Franz**
**Bicheln 42**
**A-5733 Bramberg (AT)**

(72) Erfinder: **Prossegger, Franz**
**Bicheln 42**
**A-5733 Bramberg (AT)**

(54) **Energierückführungssystem für Heizvorrichtungen.**

(57) Das System besteht aus einem unten durch den Luft und Schwelgasdurchströmten Hohlrost -Fig.3- abgeschlossenen Füllschacht -2-, mit untenliegendem Teilabbrand -3- in die nachgeschaltete horizontale Brennkammer -4-, die an der Kesselrückseite in die sich nach oben erweiternde Brennkammer -5- übergeht, der die vertikalen Abgaszüge -6-, zwischen Füllschacht -2- und Brennkammer -5- angebracht, angeschlossen. in das oben auf den Wassermantel waagrecht aufgesetzte, von der Kesselmantelisolierung umgebene Rauchrohr -7- münden.
Die Frischluftversorgung des Abbrandes -3-, sowie Schwelgasrückführung aus dem oberen Füllschachtbereich erfolgt durch getrennte, am Rauchrohr. -7- angebrachte, von dessen Strahlungswärme beheizte Formkammern -9- und -10-, über die Verbindungskanäle -9'- und -10'- an der Kesselrückseite, zur untenliegenden Mischkammer -11-. Dann strömen die Luft und Schwelgase vermischt, sich weiter erhitzend, durch mehrere, von der Verbrennungshitze angestrahlten Profilrohre. die mit Zwischenräumen aneinanderliegend das Glutnest der Abbrandzone -3- tragen, zur Kesselvorderseite und gelangen aus Überströmschlitzen in umgekehrten Sinne auf das Brennmaterial, wobei die Überströmschlitze etwa in gleicher Höhe zur Einzugsöffnung der Brennkammer -4- angebracht, bei Volllastbetrieb ein Umlegen der Abbrandflamme in die Brennkammer -4-, bei unterbundener Schwelgasbildung im Füllschacht -2-, bewirkt.

EP 0 224 466 A2

# Beschreibung

zum ERS = Energierückführungssystem für Heizvorrichtungen.

Die Erfindung bezieht sich auf Heizkessel. bzw. Verbrennungsanlagen , für alle festen Brennstoffe. mit einem unten durch einen Rost abgeschlossenen Füllschacht. der von oben durch eine Füllklappe beschickbar ist, und durch eine Wand von einer nachgeschalteten Brennkammer getrennt ist. die über eine oberhalb des Rostes befindliche Durchlaßöffnung mit dem Füllschacht in Verbindung steht.
Derartige Verbrennungsverfahren bilden im Füllschacht Schwelgas, das bei verschiedenen Systemen wieder der Abbrandzone zugeführt wird. Die Frischluftversorgung des Glutnestes erfolgt je nach Hersteller auf verschiedene Arten. Weiters sind Versuche bekannt, Frischluft bzw. Schwelgase in Kammern oder Kanälen vorzuwärmen und dann der Verbrennung zuzuführen. Bedingt durch den Widerstand, den die Kanäle unabhängig von Anbringung und Gestaltung den durchströmenden Gasen entgegensetzen, erfordern solche Systeme eine höheren Kaminzug auf die Brennkammer, und damit auf die Abbrandzone und Luftansaugung, um eine saubere Verbrennung zu erreichen. Anlagen dieser Art bringen höhere Abbrandtemperaturen gegenüber geläufigen Verfahren, haben aber den Nachteil, daß z.B. bei einem Heizkessel anstatt Wärmetauschern Heizflächen für die Gasvorwärmung angebracht werden. Dann neigen solche Systeme durch den Ansaugwiderstand dazu, im Teillastbereich korrosionsagressives und schwer brennbares Schwelgas von unten aus dem Füllschacht in die nachgeschaltete Brennkammer einzusaugen. Weitere Probleme betreffen die Wirtschaftlichkeit und Regelbarkeit dieser Anlagen bei Kleinbrand, Belastungs schwankungen. sowie im Dauerbrand, da gute Einstellkenntnisse und häufige Kontrolle von der Bedienungsperson erforderlich sind, um gute Leistungsabgabe zu erreichen.

Die Erfindung setzt sich zur Aufgabe, Systeme dieser Art zu verbessern, sowie Strahlungswärme von Rauchrohr und Abbrandzone für die Luft- und Schwelgasvorwärmung zu nutzen und mit einem neuen Abbrandverhalten den Wirkungsgrad zu erhöhen.

Der Beschreibung sind folgende Zeichnungen angeschlossen:

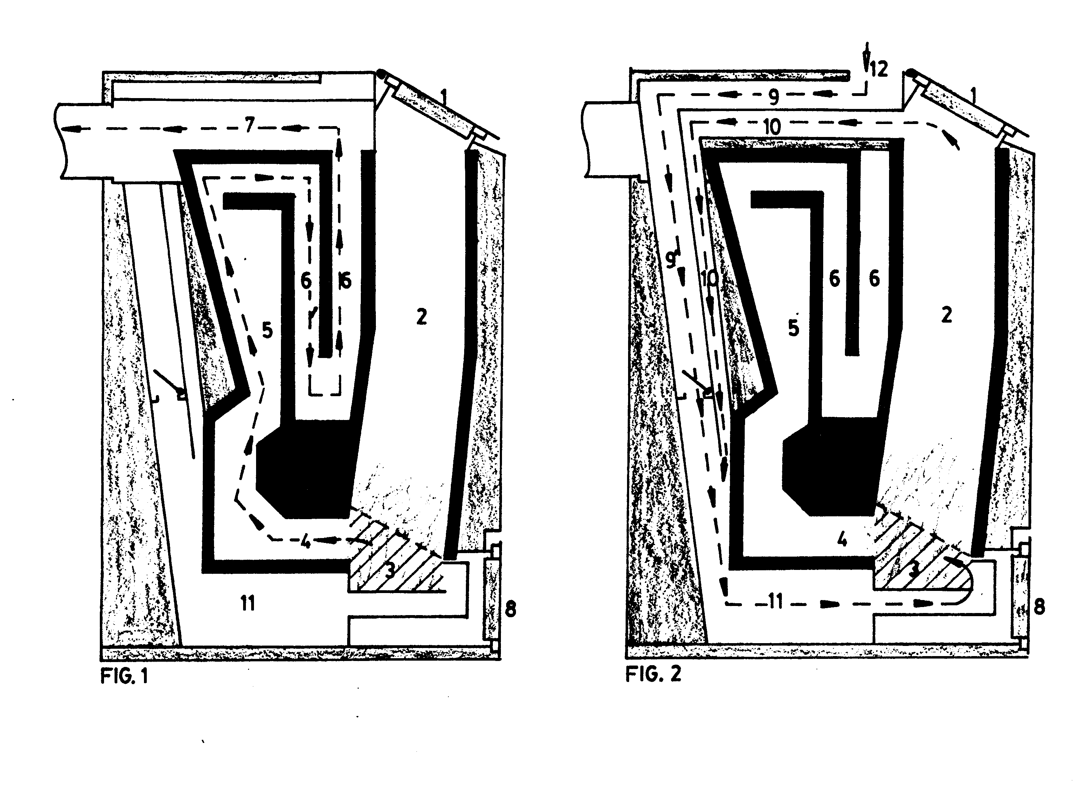

Fig. 1 stellt einen längsschnitt des Flammen- und Abgasverlaufes dar

Fig. 2 zeigt den Frischluft- und Schwelgasverlauf zur Abbrandzone

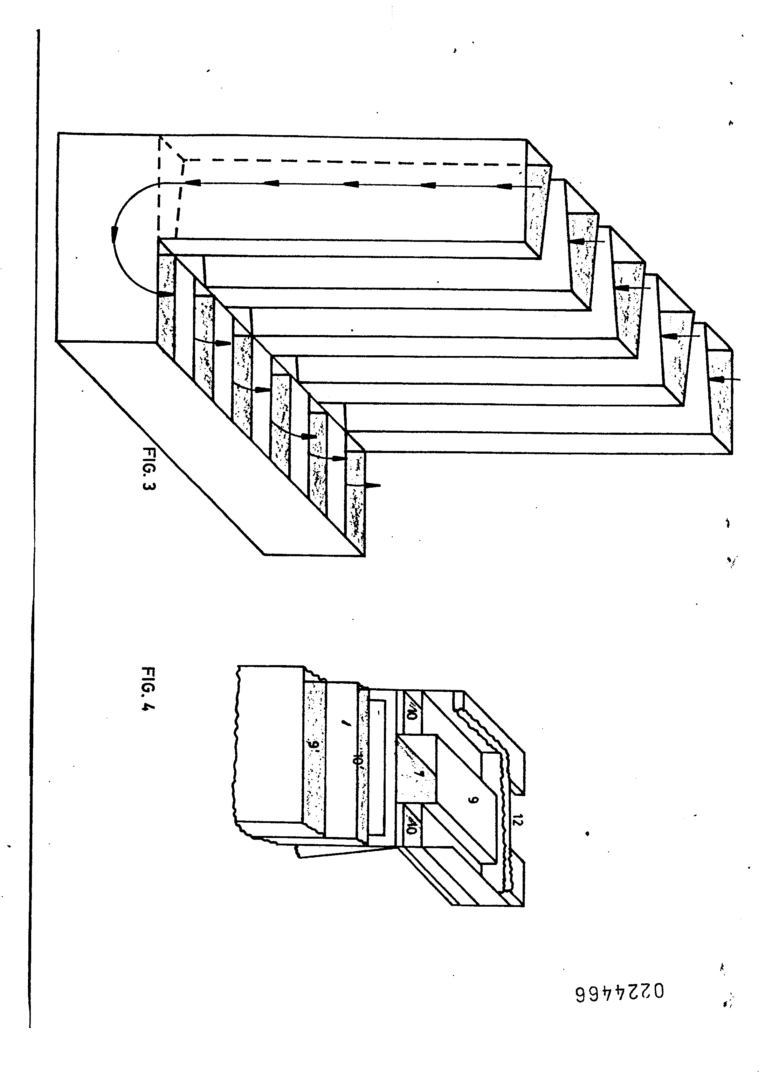

Fig. 3 zeigt den neuen Abbrandrost mit den Trapezrohren und aufgesetzten Überströmschlitzen

Fig. 4 stellt von der Kaminseite gesehen, eine Schnittzeichnung vom Rauchrohr mit den seitlich angebrachten Schwelgaskanälen, sowie den Frischluftkanal mit den an der Kesselrück-seite vertikal angebrachten Verbindungskanä-len zur Mischkammer dar.

Wesentliche Systemgebundene Merkmale:
Die Höhe der Abbrandzone -3- ist durch die Luftzufuhr so festgelegt. daß sie über die Oberkante von Kammer -4- etwas in den Füllschacht ragt, dadurch wird das Einsaugen von Schwelgas aus dem Füllschacht verhindert. Der Abbrand erfolgt in die nachgeschaltete Brennkammer, die sich aus einem horizontalen Einzugsstück -4- und einer sich gleichmäßig nach oben erweiternden Zugschleuse -5- zusammensetzt. Dann strömen die Verbrennungsgase durch die vertikalen Abgaszüge -6-. die zwischen der Brenn kammer -5- und dem Füllschacht -2- angebracht sind, ins obenliegende Rauchrohr -7- und gelangen in den Kamin.
Die Frischluftversorgung des Systems erfolgt an der Kesseloberseite. Das Schwelgas wird durch zwei seitlich am Rauchrohr angebrachte Kanäle aus dem Füllschacht abgesaugt. wobei es ein in die Füllklappe eingebauter, nach oben ansteigender Kanal ermöglicht, nach Bedarf Frischluft dem Schwelgas beizumischen. Frischluft und Schwelgase gelangen am Rauchrohr entlang zur Kesselrückseite, durch getrennte vertikale Kanäle zur Mischkammer, und strömen vermischt durch die anstatt des Rostes angebrachten Formkammern zur Kesselvorderseite und in umgekehrten Sinne aus den Überströmschlitzen auf das Brennmaterial.

Neu ist die Anbringung und Verwendung des Rauchrohres als Vorwärmfläche für Luft und Schwelgase. Der Abgaszug -6- mündet am Füllschacht -2- angebracht in das Rauchrohr, das als separates Element mit einer Isolierschicht in horizontaler Lage mittig auf den Wassermantel aufgesetzt ist. Zum Wassermantel isoliert, sind seitlich die Schwelgaskanäle -10-, wegen des kleineren Querschnittes in halber Höhe am Rauchrohr -7- angeschweißt. Es ist mit den Schwelgaskanälen in die Kesselmanteilisolierung eingeschlossen, wobei zwischen Rauchrohr und Deckelisolierung ein größerer Luftspalt vorgesehen ist. der die Form eines aufgestellten-U einnimmt, und als Luftvorwärmekanal -9- verwendet wird.-- Erreicht wird die Luftvorwärmung, indem Frischluft durch den rechteckigen Einlaß -12- im Isolierdeckel an der Kesseloberseite in Füllschachtnähe auf das Rauchrohr -7- einströmt, und sich an dessen vergrößerter Oberfläche auf gleiche Temperatur erhitzend. langsam zur Kesselrückseite gelangt.

Die vom Rauchrohr -7- beheizten Schwelgaskanäle -10- leiten das im Füllschacht -2- entstehende Schwelgas zur Kesselrückseite. Dabei erfolgt die Aufheizung, sowie Verdampfung der enthaltenen Feuchtigkeit, bei kaum auftretender Kondenswasserbildung. Die Strömungsgeschwindigkeit der Luft- und Schwelgase am Rauchrohr ist so gewählt, daß sie in jeden Belastungszustand auf Abgastemperatur aufgeheizt werden.-- Die weiterleitung der vorgewärmten Luft- und Schwelgase erfolgt durch getrennte vertikale, mit einer Isolierschicht umgebene Kanäle -9'- und-10'-, an der Kesselrückseite, wobei in Luftkanal -9'- eine Regelklappe eingebaut ist, zur untenliegenden Mischkammer -11-, wo sich Luft und Schwelgase vermischen = Verbrennungsluft. In der Folge strömt sie durch den neuen Rost über Schlitze auf das Brennmaterial.

Der Erfindungsgemäß Rost setzt sich aus mehreren, vorwiegend trapezförmigen, längs zur Abbrandrichtung waagrecht angebrachten Rohren zusammen, die dessen Hitze ausgesetzt sind und deshalb die durchströmenden Luft und Schwelgase aufheizen. Am vorderen Rohrende sind quer die Überströmschlitze angeschweißt, die die Verbrennungsluft oberhalb der Trapezrohre in umgekehrten Sinne zur Abbrandzone -3- freigeben. Am anderen Ende verbindet eine Dichtfläche die Rohre mit der Mischkammer -11- so, daß die Verbrennungsluft nur in den Rohren zu den Überströmschlitzen gelangt.-- Der trapezförmige Rohrquerschnitt ergibt einen störungsfreien Ascheausfall in den Zwischenräumen, bei größter Hitzebestrahlung vom Abbrand, wobei die Strömungsgeschwindigkeit der durchströmenden Gase so gewählt ist, daß im Teillastbereich die höchste Aufheizung erfolgt. Bei kleinkörnigem Verbrennungsgut können zwischen den Trapezrohren zusätzlich Roststäbe angebracht sein.

Der Abbrand erfolgt in einer schmalen Linie mit aufgeheizter Verbrennungsluft von den Überströmschlitzen, in eine horizontale Brennkammer -4-, die an der Kesselrückseite in eine sich nach oben erweiternde Brennkammer -5- übergeht. Diese neue Brennkammeranordnung bringt den Vorteil, daß belastungsunabhängig die größte Wärmeabstrahlung bei kleinstem Abstand auf die Wasserummantelung in Kammer -4- erfolgt. sowie eine genaue Eingrenzung der Abbrandmenge ermöglicht. Die Erweiterung nach oben in Brennkammer -5- bringt mit der aufsteigenden Hitze hohe Gasbeschleunigung, und erzeugt dadurch den für einen sauberen Verbrennungsablauf notwendigen Sog auf die Abbrandzone, sowie die Luft- und Schwelgasansaugung. Die besondere Luftzuführung mit dem Saugeffekt von der Brennkammer auf den Abbrand, ist so abgestimmt, daß bei Vollastbetrieb die Abbrandflamme horizontal umgelenkt wird. dadurch erfolgt keine wesentliche Schwelgasbildung im Füllschacht, sodaß der Verbrennung nur aufgeheizte Luft auf die beschriebene Art, bei geöffneter Regelklappe im Luftkanal zugeführt wird.

Je weiter die Regelklappe geschlossen wird, umso mehr richtet sich die kleiner werdende Abbrandflamme auf, setzt dadurch dem Brennkammersog erhöhten Widerstand entgegen und reduziert die Strömungsgeschwindigkeit in den Flammen- und Abgaszügen wesentlich. Gleichzeitig erhöht sich der Sog im Schwelgaskanal -10'-, wo nun das im Füllschacht stark entstehende Schwelgas schneller abgesaugt wird.

Bei geschlossener Regelklappe wird der volle Sog auf den Schwelgaskanal wirksam. sodaß zum Schwelgas durch das Vakuum im Füllschacht, Frischluft durch einen nach oben ansteigenden, in die Füllklappe integrierten Kanal, eingesaugt wird. Diese Frischluftmenge ist so bemessen, daß mit der erhöhten Vorwärmung im Teillastbereich, um die Brennbarkeit des veränderten Luft und Schwelgasgemisches zu fördern, einwandfreie Verbrennung in jedem Lastzustand erzielt wird.

Die Eigenheit des Systems besteht in der absolut genauen Regelbarkeit mit einer einzigen Regelklappe im Lufansaugkanal -9'-, da in der Abbrandzone je nach Belastung durch das umlegen oder aufstellen der Flammen, Frischluftabhängig eine selbsttätige Zugregelung von seitens des Abbrandes durch Anheben oder Absenken der Strömungsgeschwindigkeit in den Brennkammern erfolgt. Weiters ergibt sich daraus ein sofortiges Anpassen der Heizleistung auf die jeweiligen Belastungsverhältnisse, sodaß z.B. auch bei Schockbelastungen, wie sie beim zuoder abschalten von mehreren Heizkreisen oder Heißwasserboilern auftreten, keine wesentliche Abweichung von der eingestellten Regeltemperatur erfolgt.

Da die Verbrennung durch die Versorgung mit einem aufgeheizten leicht brennbaren Gas-Luft-Gemisch wesentlich höhere Flammentemperaturen erzeugt, somit größere Heizoberflächen ermöglicht, entsteht mit der niedrigen Abgastemperatur ein hoher Gesamtwirkungsgrad, bei sauberster Verbrennung in allen Lastbereichen und einfachster Bedienung.

## Patentansprüche

1.) Heizkessel, bzw. Verbrennungsanlagen für feste Brennstoffe, mit einem unten durch einen Rost abgeschlossenen Füllschacht, der von oben beschickbar ist, und eine nachgeschaltete Brennkammer aufweist. dadurch gekennzeichnet, daß sich die Brennkammer aus einer horizontalen Einzugskammer -4- und einer sich nach oben erweiternden Zugschleuse -5- zusammensetzt, insbesondere dadurch gekennzeichnet, daß der Abbrand in die Kammer -4- erfolgt.

2.) Heizkessel, bzw. Verbrennungsanlagen mit einem unten durch einen Rost abgeschlossenen Füllschacht, und einer nachgeschalteten Brennkammer, dadurch gekennzeichnet, daß zwischen Füllschacht -2- und einer sich nach oben erweiternden Brennkammer -5- vertikale Abgaszüge -6- parallel aneinanderliegend angebracht sind.

3.) Heizkessel nach Anspruch 2, dadurch gekennzeichnet, daß der an der hinteren Füllschachtwand angebrachte Abgaszug -6-in das oben auf den Wassermantel horizontal aufgesetzte Rauchrohr -7- mündet.

4.) Heizkessel nach Anspruch 3, dadurch gekennzeichnet, daß das Rauchrohr -7- zur Vorwärmung von Luft und Schwelgasen verwendet wird, weiters dadurch gekennzeichnet, daß die Vorwärmung durch das Anliegen der Luft -9- und Schwelgaskanäle -10- am Rauchrohr erreicht wird.

5.) Heizkessel deren Abbrandzone nach unten durch einen Rost abgeschlossen ist, dadurch gekennzeichnet, daß anstatt der Roststäbe mehrere Rohre mit Zwischenräumen aneinanderliegend das Glutnest tragen, insbesondere dadurch gekennzeichnet, daß die von der Abbrandhitze angestrahlten Rohre, die durch sie durchströmenden Luft und Schwelgase aufheizen.

6.) Heizkessel nach Anspruch 5, dadurch gekennzeichnet, daß den von der Abbrandhitze angestrahlten Rohren an einem Ende Überströmschlitze aufgeschweißt sind, die die Luft und Schwelgase in umgekehrten Sinne zum Brennmaterial freigeben.

FIG. 2

FIG. 1

FIG. 3

FIG. 4